# DEMANDE DE BREVET EUROPEEN

(11) **EP 0 909 669 A1**
(43) Date de publication de la demande: **21.04.1999**
(21) Numéro de dépôt: 98119264.4
(22) Date de dépôt: 13.10.1998
(51) Int. Cl.: B60H 1/00

(54) **Boîtier de traitement d'air à gestion de température perfectionnée, pour une installation de chauffage et/ou climatisation, notamment de véhicule automobile**

(30) Priorité: 14.10.1997 FR 9712843
(71) Demandeur: VALEO CLIMATISATION, 78321 La Verrière (FR)
(72) Inventeur: Raccouard, Michel, 78310 Maurepas (FR)
(74) Mandataire: Gamonal, Didier

(57) **Abrégé**

Un boîtier de traitement d'air (1) pour une installation de chauffage et/ou climatisation, notamment de véhicule automobile, comprend une entrée d'air (6) alimentant, de façon contrôlée par un volet de mixage (13), une chambre de mixage (10) et une chambre de chauffage (7) débouchant dans la chambre de mixage. Le boîtier est conformé de sorte que les flux d'air frais et d'air réchauffé qui pénètrent dans la chambre de mixage (10) présentent des sections transversales contenues respectivement dans des premier et second plans comprenant une droite d'intersection et dont les projections respectives sur la droite sont respectivement des premier et second segments de droite non confondus et présentant au moins une partie commune.

## Description

L'invention concerne le domaine des installations de chauffage et/ou climatisation, notamment de véhicule automobile, et plus particulièrement le boîtier de traitement et distribution d'air que comprennent certaines de ces installations.

Elle concerne plus particulièrement les boîtiers dans lesquels peut être obtenue une gestion de la température des différents flux d'air qui alimentent respectivement les conduits de distribution débouchant dans l'habitacle du véhicule par des bouches de dégivrage, d'aération médiane et d'aération pieds, notamment.

De tels boîtiers comprennent généralement une entrée d'air qui alimente, de façon contrôlée par un volet de mixage, une chambre de mixage, alimentant en air traité les conduits de distribution, et une chambre de chauffage qui débouche dans cette chambre de mixage.

On entend ici par air traité aussi bien de l'air frais destiné à alimenter directement l'un au moins des conduits de distribution, sans réchauffage préalable, que de l'air réchauffé ou réfrigéré destiné à alimenter ces mêmes conduits.

Afin d'améliorer le confort aérothermique dans l'habitacle du véhicule, certaines installations offrent en sortie des différentes bouches d'aération des flux d'air de températures différentes. L'homme de l'art appelle cela une stratification de l'air. Cela permet notamment de faire fonctionner l'installation dans un mode "dégivrage-pieds" où l'air distribué par les bouches de dégivrage, placées à la base du pare-brise, peut être plus chaud que celui qui est distribué par les bouches d'aération, placées au niveau des pieds des passagers logés dans l'habitacle.

Pour obtenir une telle stratification de l'air, l'homme de l'art a déjà proposé des solutions consistant à utiliser à l'intérieur des boîtiers, au niveau de la chambre de mixage, des conduits additionnels pour alimenter préférentiellement certains conduits avec de l'air frais ou de l'air réchauffé. D'autres solutions portant sur les positions relatives des entrées des différents conduits de distribution au niveau de la chambre de mixage ont également été envisagées. Cependant, ces solutions n'offrent pas une entière satisfaction dans la mesure où, notamment, elles n'assurent pas un bon mélange de l'air frais et de l'air réchauffé, indispensable pour gérer la température des flux d'air à distribuer dans les différentes parties de l'habitacle.

Un but de l'invention est donc de procurer un boîtier de traitement d'air pour une installation de chauffage et/ou climatisation permettant de remédier à l'inconvénient précité.

L'invention propose à cet effet un boitier du type décrit précédemment, qui est conformé de sorte que les flux d'air frais et d'air réchauffé qui pénètrent dans la chambre de mixage présentent des sections transversales contenues respectivement dans des premier et second plans qui s'intersectent selon une droite d'intersection et dont les projections sur la droite d'intersection sont formées respectivement d'au moins un premier segment de droite et d'au moins un second segment de droite non confondus et présentant au moins une partie commune.

En d'autres termes, les flux d'air débouchent dans la chambre de mixage à des niveaux partiellement identiques, si bien que dans la ou les régions où leurs niveaux sont identiques ils peuvent être mélangés, tandis que dans les régions où leurs niveaux ne sont pas identiques ils demeurent sensiblement indépendants l'un de l'autre. Cela permet d'assurer une gestion efficace de la stratification de l'air à l'intérieur de la chambre de mixage.

Dans une forme de réalisation préférée, la chambre de mixage présente une extension dans la direction parallèle à la droite d'intersection au moins égale à la réunion desdits premier(s) et second(s) segments de droite. Le mot "réunion" est ici entendu dans sa définition mathématique, à savoir "ensemble des portions communes et non communes des premier et second segments de droite". Cela permet aux flux d'air de températures différentes de demeurer sensiblement non mélangés à l'intérieur de la chambre de mixage, jusqu'à ce qu'ils parviennent dans les conduits de distribution.

Préférentiellement, la projection de la section transverse de chaque flux d'air pénétrant dans la chambre de mixage est constituée d'un seul segment de droite, premier ou second selon qu'il s'agit d'air frais (ou réfrigéré) ou d'air réchauffé. Mais, il est clair qu'une projection de section transversale de flux d'air pourra être constituée de plusieurs segments de droite.

Dans un mode de réalisation où il n'existe qu'une seule région de mélange des flux d'air frais et d'air réchauffé (c'est à dire lorsque chaque projection n'est constituée que d'un seul segment de droite), le second segment de droite de la projection de la surface transversale du flux d'air réchauffé sur la droite d'intersection s'étend au-delà de l'une au moins des deux extrémités du premier segment de droite de la projection de la surface transversale du flux d'air frais sur la droite d'intersection. Pour ce faire, la chambre de chauffage présente de préférence, au moins au niveau de l'endroit où elle communique avec la chambre de mixage, une section transversale dont l'extension dans la direction parallèle à la droite d'intersection est supérieure à celle de la section transversale du flux d'air frais qui pénètre dans cette chambre de mixage. Ici, le second segment (air réchauffé) est donc complètement superposé au premier segment (air frais), et dépasse celui-ci, de sorte que l'on crée une couche d'air mélangé (air frais et air réchauffé) et au moins une couche d'air réchauffé.

La chambre de chauffage pourra, notamment, présenter dans la direction parallèle à la droite d'intersection, au niveau de la chambre de mixage, une extension telle que le second segment de droite s'étend au-delà des deux extrémités du premier segment de droite, permettant ainsi d'alimenter en air réchauffé à une même température deux conduits de distribution placés sensiblement symétriquement de part et d'autre de la région où les flux d'air frais et d'air réchauffé sont mélangés. La couche d'air mélangé est dans ce cas comprise entre deux couches d'air réchauffé.

Bien entendu, on peut envisager de créer plus de trois couches dans la chambre de mixage, par exemple en utilisant des cloisons transversales (parallèles aux sections transversales des flux) à l'entrée de ladite chambre de mixage. De même, on peut former trois couches superposées de températures différentes, par exemple une couche d'air frais et une couche d'air réchauffé respectivement "au dessus" et "au dessous" d'une couche d'air mélangé.

Dans la description qui suit, faite à titre d'exemple, on se réfère aux dessins annexés, sur lesquels :
- la figure 1 illustre schématiquement un boîtier de distribution selon l'invention, dans une vue en coupe longitudinale médiane;
- les figures 2 à 4 sont des vues en coupe du boîtier de la figure 1 respectivement selon les axes II-II, III-III et IV-IV, dans lesquelles les régions munies de points sont traversées par de l'air réchauffé, les régions munies de traits sont traversées par de l'air frais et les régions munies de croix sont traversées par de l'air mitigé; et
- la figure 5 est un schéma illustrant les positions relatives des entrées d'air frais et d'air réchauffé de la chambre de mixage du boîtier de la figure 1 dans une vue en perspective selon les flèches V-V.

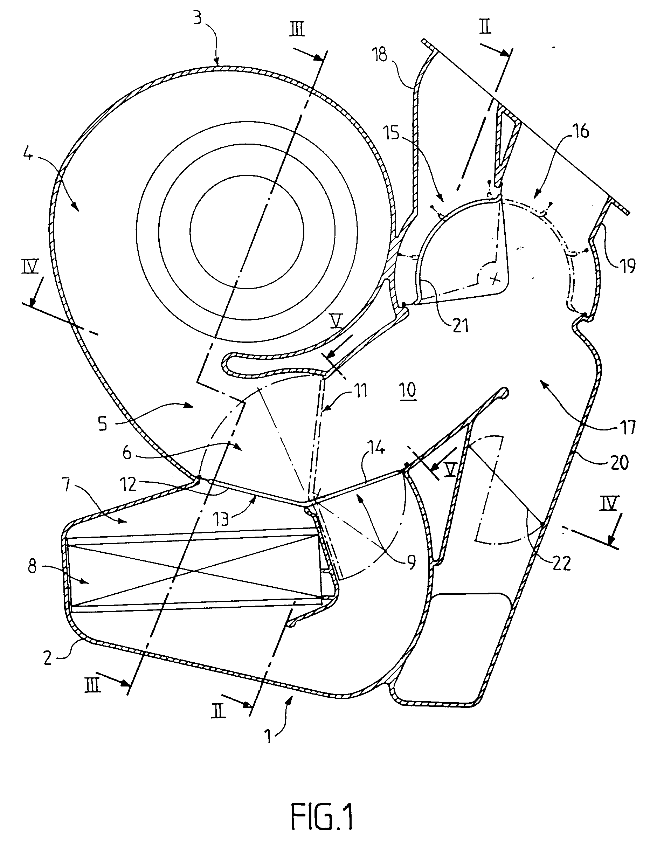

Sur la figure 1 se trouve illustré, dans une vue en coupe longitudinale médiane, un boitier 1 de traitement et de distribution d'air matérialisé partiellement par deux génératrices parallèles 2 délimitant l'épaisseur de ses parois. Un tel boîtier fait partie d'une installation de chauffage-ventilation, par exemple d'un véhicule automobile.

Ce type de boîtier a pour objet de fournir de l'air traité à l'intérieur de l'habitacle du véhicule via des bouches de sortie, telles que les bouches de dégivrage placées à la base du pare-brise, les bouches d'aération dites "médianes" placées dans la planche de bord du véhicule, et les bouches d'aération dites "pieds" placées au niveau des pieds des passagers logés dans l'habitacle.

On entend ici par air traité, de l'air frais non réchauffé, ou bien de l'air chaud réchauffé. Dans le cas d'une installation de climatisation, il pourra également s'agir d'air refroidi.

L'air frais qui est traité par le boîtier 1 est issu d'un groupe moto-ventilateur 3 dont le pulseur est alimenté par de l'air issu de l'extérieur (air dit extérieur) ou par de l'air issu de l'intérieur de l'habitacle (air dit recirculé).

Le pulseur comprend une volute 4 dont la sortie 5 alimente une entrée d'air 6 du boîtier 1.

Dans l'exemple illustré, la volute 4 est formé d'un seul bloc avec le boîtier 1. Dans une variante, le boîtier 1 pourra comprendre des moyens de fixation permettant son accouplement au pulseur, et notamment son raccordement à la volute 4.

Le boîtier 1 comprend en aval de l'entrée d'air 6 une chambre de chauffage 7 dans laquelle se trouve implanté un radiateur de chauffage 8 destiné a réchauffer tout ou partie de l'air frais extérieur ou recirculé issu du pulseur via l'entrée d'air 6.

La chambre de chauffage 7 débouche au niveau d'une entrée dite entrée d'air réchauffé 9 d'une chambre de mixage 10.

Cette chambre de mixage 10 comprend une autre entrée d'air 11 dite entrée d'air frais qui, dans l'exemple illustré sur la figure 1 se trouve placé à proximité de l'entrée d'air 6, et en aval de celle-ci.

L'accès à l'entrée d'air frais 11 et à la chambre de mixage 7 est contrôlé, dans cet exemple, par une première partie 12 d'un volet de mixage 13.

Dans l'exemple illustré, le volet de mixage 13 comprend une seconde partie 14 qui prolonge la première partie 12 et qui contrôle l'accès à l'entrée d'air chaud 9 de la chambre de mixage 10 (ou sortie de la chambre de chauffage 7).

Bien entendu, on pourrait prévoir deux volets indépendant pour contrôler, d'une part, l'entrée d'air frais 11 de la chambre de mixage et l'entrée de la chambre de chauffage 7, et d'autre part, l'accès à l'entrée d'air réchauffé 9 de la chambre de mixage 10.

Par ailleurs, le boîtier pourrait également comprendre une chambre d'alimentation en air frais (ou un conduit) entre l'entrée d'air 6 et l'entrée d'air frais 11.

Le volet de mixage 13 peut prendre une multiplicité de positions de façon à permettre la gestion de la température de l'air au niveau de la chambre de mixage 10. Ces différentes positions du volet de mixage 13 sont comprises entre une position dans laquelle l'entrée d'air frais 11 est complètement obstruée, et par conséquent tout l'air frais issu du pulseur est réchauffé dans la chambre de chauffage 7 et débouche dans la chambre de mixage 10 par l'entrée d'air réchauffé 9, et une position dans laquelle l'accès à la chambre de chauffage 7 est totalement interdit, et par conséquent tout l'air frais issu du pulseur débouche dans la chambre de mixage 10 via l'entrée d'air frais 11. Dans cette dernière position, la seconde partie 14 du volet de mixage 13 obture complètement l'entrée d'air réchauffé 9.

La chambre de mixage 10 comporte trois sorties, dites respectivement sortie dégivrage 15, sortie aération médiane 16 et sortie aération pieds 17, destinées respectivement à alimenter des conduits d'air débouchant dans l'habitacle du véhicule au niveau des bouches de dégivrage, d'aération médiane, et d'aération pieds.

Dans l'exemple illustré sur la figure 1, les sorties 15, 16 et 17 alimentent en fait des pré-conduits 18, 19 et 20 formés dans le boîtier 1 et destinés à être connectés aux différents conduits d'alimentation en air de l'installation.

L'accès aux différentes sorties 15, 16 et 17 de la chambre de mixage 10 est géré par des volets de distribution. Dans l'exemple illustré, le boîtier 1 est conformé, au niveau de la partie aval de la chambre de mixage 10 qui alimente ses différentes sorties, de sorte qu'un premier volet de distribution 21 gère à la fois l'accès aux sorties 15 et 16, tandis qu'un second volet de distribution 22 gère l'accès à la sortie d'aération pieds 17, et plus précisément au préconduit 20.

Bien entendu, on pourrait prévoir deux volets pour gérer de façon indépendante, ou dépendante, l'accès aux sorties de dégivrage 15 et d'aération médiane 16.

Afin d'autoriser différents modes aérothermiques à l'intérieur de l'habitacle, le premier volet de distribution 21 peut prendre au moins 2 positions intermédiaires comprises entre une position "aération" dans laquelle la sortie de dégivrage 15 est complètement obstruée tandis que la sortie d'aération médiane 16 est totalement libérée et une position "dégivrage" dans laquelle la sortie d'aération médiane 16 est totalement fermée tandis que la sortie de dégivrage 15 est totalement libérée.

Dans Certaines conditions d'utilisation de l'installation, il est intéressant d'obtenir à l'intérieur du boîtier une stratification de température autorisant des températures sensiblement différentes entre, par exemple, la sortie de dégivrage 15 et la sortie d'aération 17. Un tel mode de fonctionnement est plus connu sous l'appellation anglaise de bi-level.

Dans une tel mode (bi-level), l'air qui alimente les bouches de dégivrage doit être, de préférence, sensiblement plus chaud que l'air qui alimente les bouches d'aération pieds.

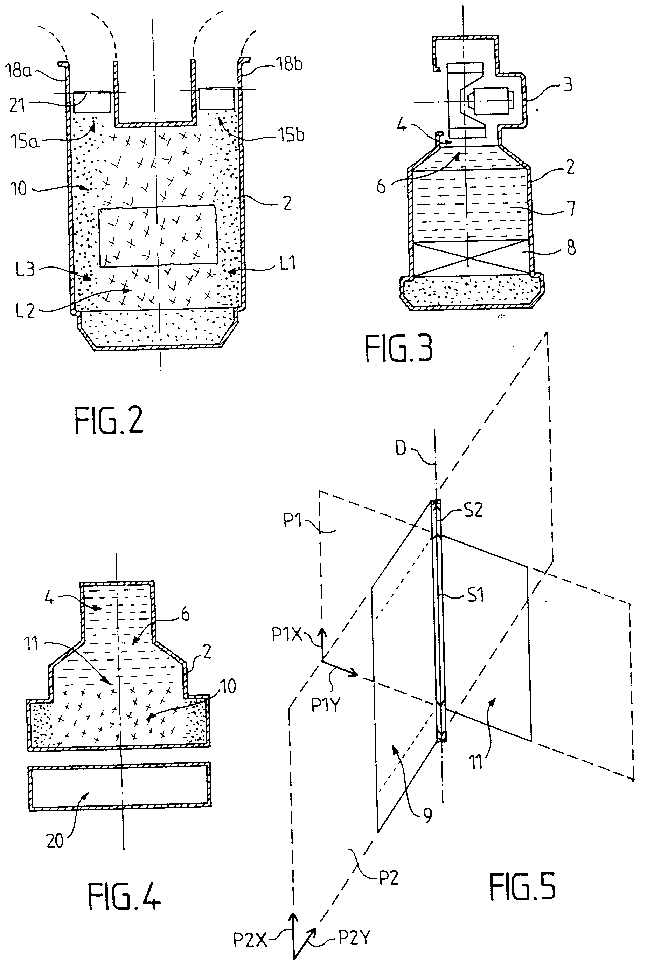

Le boîtier selon l'invention est capable d'offrir une stratification de la température, assurant un tel mode bilevel. Pour ce faire, le boîtier 1 selon l'invention est conformé de sorte que les flux d'air frais et d'air réchauffé qui pénètrent dans la chambre de mixage 10 respectivement par l'entrée d'air frais 11 et l'entrée d'air réchauffé 9 débouchent à l'intérieur de la chambre de mixage 10 à des niveaux qui ne sont pas totalement superposables. Cet agencement est mieux illustré sur les figures 2 à 4.

En fait, si l'on utilise un langage plus "mathématique", les flux d'air frais et d'air réchauffé qui pénètrent à l'intérieur de la chambre de mixage 10 présentent, au niveau de ses deux entrées 11 et 9, des sections transversales contenues respectivement dans des premier P1 et second P2 plans qui s'intersectent selon une droite d'intersection D (voir figure 5) et dont les projections sur cette droite D sont respectivement des premier S1 et second S2 segments de droites présentant au moins une partie commune.

On entend ici par section transversale une coupe perpendiculaire à la direction moyenne du flux d'air concerné. En d'autres termes, la section transversale du flux d'air frais au niveau de l'entrée d'air frais 11 est sensiblement égale à la surface de cette entrée d'air frais 11, tandis que la section transversale du flux d'air réchauffé au niveau de l'entrée d'air réchauffé 9 est sensiblement égale à la surface de cette entrée d'air 9.

Sur la figure 5 la projection de la surface de l'entrée d'air frais 11 sur la droite D (intersection des plans P1 et P2) forme le segment S1 délimité par une simple flèche en chacune de ses deux extrémités. De même, la projection de la surface de l'entrée d'air réchauffé 9 sur la droite D forme le segment S2 délimité par une double flèche en chacune de ses deux extrémités. Si l'on considère que la droite D est verticale (mais elle pourrait tout aussi bien être horizontale selon l'orientation du boîtier), les deux extrémités du segment de droite S2 dépassent respectivement en haut et en bas les deux extrémités du segment de droite S1.

Dans cet exemple, on obtient dans la chambre de mixage 10 trois couches d'air sensiblement parallèles et superposées les unes aux autres.

Lorsque le volet de mixage 13 se trouve dans une position intermédiaire dans laquelle l'air frais issu du pulseur 3 est distribué au niveau de l'entrée d'air frais 11 et de la chambre de chauffage 7 de façon à déboucher au niveau de l'entrée d'air réchauffé 9, il se forme dans la partie amont de la chambre de mixage 10, située à proximité de ses entrées 11 et 9, trois couches, une couche supérieure L1, une couche centrale L2, et une couche inférieure L3. Les qualificatifs "supérieur" et "inférieur" s'entendent ici par rapport à une droite D verticale. La couche supérieure L1 est une couche d'air réchauffé (matérialisée sur les figures 2 à 4 par des points), issue de la partie supérieure de la chambre de chauffage 7, laquelle au niveau de l'entrée d'air réchauffé 9 s'étend au dessus et au dessous du niveau de l'entrée d'air frais 11. La couche intermédiaire L2 est constituée d'un air dit mitigé résultant du mélange entre l'air réchauffé issu de la chambre de chauffage 7 et de l'air frais parvenant au niveau de l'entrée d'air frais 11. Sur les figures 2 à 4, cet air mitigé est matérialisé par des croix. A l'intérieur de la chambre de mixage 10, la couche d'air mitigé s'étend sur une hauteur sensiblement égale à l'extension du segment S1, au moins dans la partie amont de la chambre de mixage 10. Enfin, la couche inférieure L3 est formée d'air réchauffé issu de la partie inférieure de la chambre de chauffage 7.

Dans cet exemple, la couche d'air mitigé est par conséquent encadrée dans ces parties supérieures et inférieures par des couches d'air réchauffé.

Comme cela est illustré sur les figures 2 à 5, les épaisseurs respectives des couches d'air réchauffé L1 et L3 dans la chambre de mixage sont sensiblement égales. En d'autres termes, les extensions du segment S2 de part et d'autre des extrémités du segment S1 sont sensiblement égales.

Bien entendu, on pourrait prévoir des couches supérieures et inférieures d'épaisseurs (ou hauteurs) différentes. De même, on pourrait prévoir seulement deux couches, une couche d'air mitigé, et une couche d'air réchauffé supérieure ou inférieure, ou bien encore une couche d'air réchauffé, une couche d'air mitigé et une couche d'air frais. Dans ce dernier cas, il suffirait que les entrées d'air réchauffé 9 et d'air frais 11 soient décalées relativement à la droite D, de sorte que la partie, par exemple inférieure, de l'entrée d'air frais 11 soit placée en dessous de la partie inférieure de l'entrée d'air réchauffé.

Comme cela est illustré sur la figure 2, la structure tricouches symétrique permet d'alimenter deux conduits de dégivrage 18a et 18b, et/ou d'aération médiane 19a et 19b, placée respectivement au niveau des couches inférieures L3 et supérieures L1 en sortie de la chambre de mixage 10 (partie aval).

Afin de permettre une bonne conservation des trois couches, sensiblement parallèles les unes aux autres, à l'intérieur de la chambre de mixage 10, il est préférable que cette chambre de mixage, et par conséquent le boîtier 1, présente une extension (ou hauteur) selon la direction D sensiblement égale à l'extension du segment S2, ou en d'autres termes à la hauteur de l'entrée d'air réchauffé 9. Comme cela est mieux illustré sur la figure 2, il est même encore préférable que cette extension de la chambre de mixage 10 soit légèrement plus grande que celle du segment S2.

Afin d'obtenir le mode de fonctionnement bi-level dans lequel la température au niveau, par exemple, des bouches de dégivrage est plus élevée que celle au niveau des bouches d'aération pieds, l'extension de la sortie d'aération pieds 17 est avantageusement égale à celle du segment S2. Ainsi, l'air qui pénètre dans le pré-conduit d'aération pieds 20 est constitué de la superposition des trois couches L1, L2 et L3 et par conséquent la température de l'air qui parvient au niveau des bouches d'aération pieds est intermédiaire entre la température de l'air réchauffé des couches L1 et L3 et de l'air mitigé de la couche intermédiaire L2. En revanche, du fait des positions respectives supérieure et inférieure des sorties dégivrage 15b et 15a, l'air qui alimente les bouches de dégivrage est principalement constitué d'air réchauffé en provenance des couches supérieures L1 et inférieures L3.

Pour obtenir des entrées d'air réchauffé 9 et d'air frais 11 d'extension, selon la droite D, différentes, et présentant une partie commune, plusieurs variantes peuvent être envisagées.

De préférence, et comme cela est illustré sur les figures 2, 3 et 4, la chambre de chauffage 7 présente en aval du radiateur 8 une extension selon la direction D sensiblement égale à S2, tandis que l'extension selon cette même direction D de la partie du boîtier comprise en amont du radiateur 8, ainsi qu'entre l'entrée d'air 6 et l'entrée d'air frais 11, est sensiblement égale à S1. Cela permet d'obtenir un boîtier très compact.

En variante, on peut prévoir un boîtier dont l'extension selon la direction D est sensiblement constante partout, aussi bien au niveau de la chambre de chauffage qu'au niveau de la chambre de mixage, et de la zone comprise entre l'entrée d'air 6 et l'entrée d'air frais 11, mais dans lequel on place une (ou plusieurs) cloison(s) au niveau de l'entrée d'air frais 11 de façon à réduire sa surface, et par conséquent l'extension selon au moins la direction D du flux d'air frais. Il est clair, que l'on pourrait prévoir de telles cloisons également au niveau de l'entrée d'air réchauffé 9 afin, par exemple de créer un nombre de couches superposées supérieur à trois.

Grâce à un boîtier selon l'invention, il est par conséquent possible d'alimenter de très nombreuses bouches de distribution d'air placées dans l'habitacle avec des flux d'air de températures différentes, certaines étant alimentées en air frais, certaines autres en air réchauffé, certaines autres encore en air mitigé. On pourrait même envisager plus de trois températures différentes.

L'invention ne se limite pas aux modes de réalisation décrit ci-avant, mais elle englobe toute les variantes que pourra développer l'homme de l'art dans le cas des revendications ci-après.

Ainsi, on a décrit un boîtier de traitement d'air pour une installation de chauffage, mais il est clair que l'invention s'applique tout autant aux installations de climatisation. Dans ce cas, l'air frais qui pénètre dans la chambre de mixage par l'entrée d'air frais, sera constitué d'air refroidi.

## Revendications

1. Boîtier de traitement d'air (1) pour une installation de chauffage et/ou climatisation, notamment de véhicule automobile, du type comprenant une entrée d'air (6) alimentant, de façon contrôlée par un volet de mixage (13), une chambre de mixage (10) et une chambre de chauffage (7) débouchant dans ladite chambre de mixage,
caractérisé en ce qu'il est conformé de sorte que les flux d'air frais et d'air réchauffé pénétrant dans la chambre de mixage (10) présentent des sections transversales contenues respectivement dans des premier (P1) et second (P2) plans comprenant une droite d'intersection commune (D) et dont les projections sur ladite droite sont formées respectivement d'au moins un premier segment de droite (S1) et d'au moins un second segment de droite (S2) non confondus et présentant au moins une partie commune.

2. Boîtier selon la revendication 1, caractérisé en ce que ladite chambre de mixage (10) présente une extension dans la direction parallèle à ladite droite d'intersection (D) au moins égale à la réunion desdits premier(s) (S1) et second(s) (S2) segments de droite.

3. Boîtier selon l'une des revendications 1 et 2, caracté-risé en ce que la projection de la section transverse de chaque flux d'air pénétrant dans la chambre de mixage (10) est constituée d'un seul segment de droite.

4. Boîtier selon la revendication 3, caractérisé en ce que ledit second segment de droite (S2) de la projection de la surface transversale du flux d'air réchauffé sur la droite d'intersection (D) s'étend au-delà de l'une au moins des deux extrémités dudit premier segment de droite (S1).

5. Boîtier selon la revendication 4, caractérisé en ce que ledit second segment de droite (S2) s'étend au-delà des deux extrémités dudit premier segment de droite (S1).

6. Boîtier selon la revendication 5, caractérisé en ce que les extensions dudit second segment de droite (S2), de part et d'autre desdites extrémités du premier segment de droite (S1), sont sensiblement égales.
